# EUROPÄISCHE PATENTSCHRIFT

(11) **EP 2 958 695 B1**
(45) Veröffentlichungstag und Bekanntmachung des Hinweises auf die Patenterteilung: **28.02.2018**
(21) Anmeldenummer: 15722200.1
(22) Anmeldetag: 13.05.2015
(51) Int. Cl.: B23B 41/12, B23D 13/00, B23P 9/00

(54) **VERFAHREN UND WERKZEUG ZUM MECHANISCHEN AUFRAUEN EINER ZYLINDRISCHEN OBERFLÄCHE**
PROCESS AND TOOL FOR MECHANICAL ROUGHENING OF A CYLINDRICAL SURFACE
PROCÉDÉ ET OUTIL POUR AUGMENTER MÉCANIQUEMENT LA RUGOSITÉ D'UNE SURFACE CYLINDRIQUE

(30) Priorität: 13.05.2014 DE 102014209054
(43) Veröffentlichungstag der Anmeldung: 30.12.2015
(73) Patentinhaber: Gühring KG, 72458 Albstadt (DE); Audi AG, 85057 Ingolstadt (DE)
(72) Erfinder: HECKEL, Gerd, 90617 Puschendorf (DE)
(74) Vertreter: Winter, Brandl, Fürniss, Hübner, Röss, Kaiser, Polte - Partnerschaft mbB
(86) Internationale Anmeldenummer: PCT/EP2015/060549
(87) Internationale Veröffentlichungsnummer: WO 2015/173281

(56) Entgegenhaltungen:
- DE-A1-102011 001 772
- DE-A1-102013 108 604
- DE-B3- 10 314 249
- JP-A- 2006 097 045

## Beschreibung

Die Erfindung betrifft ein Verfahren und ein Werkzeug zum mechanischen Aufrauen einer zylindrischen Oberfläche eines insbesondere metallischen Werkstücks, im Besonderen der Kolbenlauffläche einer Zylinderlaufbuchse in einem Zylinderkurbelgehäuse, durch Erzeugen einer definierten Mikrostruktur aus sich kreuzenden Rillen als Haftgrundlage für eine später z.B. durch thermisches Spritzen aufzutragende Oberflächenschicht.

Es ist hinlänglich bekannt, dass tribologisch hoch beanspruchte Oberflächen metallischer Werkstücke, z.B. der Kolbenlaufflächen von Zylinderlaufbuchsen, mit Hilfe spanlos oder spanabhebender Werkzeuge mechanisch aufgeraut werden, um eine gute Haftgrundlage für eine z.B. durch thermisches Spritzen aufzutragende Oberflächenschicht zu erhalten. Als Aufrauwerkzeuge kommen im Besonderen Hon-, Schneid- und/oder Formwerkzeuge zum Einsatz.

Ein derartiges Verfahren und Werkzeug ist beispielsweise in der WO 2010/015229 A1 angegeben. In dieser ist vorgeschlagen, mittels eines drehend angetriebenen und mit einem axialen Vorschub bewegten Folgewerkzeugs in eine zylindrische Substratoberfläche eine wendelförmig verlaufende Rillenstruktur mit einer Wendelsteigung von ca. 0,7 mm, einer geringen Tiefe von z.B. 0,14 mm und einer Breite von z.B. bis zu 0,18 mm einzubringen, wobei der Rillenquerschnitt mittels des Folgewerkzeugs sukzessive auf ein Endmaß bearbeitet wird. Die Rillenstruktur soll im Besonderen in der Weise erzeugt werden, dass zunächst eine Basisrille mit einer Rillengrundbreite, welche geringer ist als die Rillengrundbreite der fertigen Rille, in die Substratoberfläche eingearbeitet bzw. eingeschnitten oder eingeformt wird. Anschließend wird die Basisrille weiter in der Weise spanabhebend oder spanlos bearbeitet, dass sich zumindest auf einer Seite bzw. einer Flanke der in das Substrat eingearbeiteten Rille eine Kontur ergibt, die für den späteren Verfahrensschritts des thermischen Spritzens optimal vorbereitet ist. Die beiden Flanken der Rille können in der Weise bearbeitet werden, dass sich eine schwalbenschwanzartige Hinterschneidung bzw. eine schwalbenschwanzartig hinterschnittene Verengung ergibt. Aufgrund dieser Verengungen der Rillen soll es gelingen, zwischendem Substrat und der Beschichtung eine außergewöhnliche feste Verklammerung bereitzustellen. Die schrittweise Einarbeitung der Rillenstruktur soll dafür sorgen, dass an den nachfolgend in Eingriff kommenden Zähnen bzw. Schneiden des Folgewerkzeugs gleichbleibende Kräfte auftreten. Das in der WO 2010/015229 A1 vorgeschlagene Folgewerkzeug zeichnet sich durch eine beispielsweise quaderförmige Form- und Schneidplatte mit zumindest drei kammartig hintereinander liegenden Zähnen aus, die in der Substratoberfläche eine gewünschte Rillenstruktur schrittweise einarbeiten. Das Werkzeug kann als reines Form-, Schneid- oder Honwerkzeug ausgebildet sein oder aber auch als Werkzeug, das die verschiedenen Bearbeitungsformen - z.B. Schneiden und Formen oder Honen und Formen oder Schneiden und Honen - kombiniert. Die Rillenstruktur wird mittels des Folgewerkzeugs in einem Werkzeugvorhub, d.h. in einer Vorwärtsbewegung des Werkzeugs in die Substratoberfläche eingebracht. Der anschließende Werkzeugrückhub, d.h. die Rückwärtsbewegung des Werkzeugs, ist dagegen ein Leerhub, weil keine weitere Bearbeitung der Rillenstruktur mehr stattfindet.

Ein weiteres Verfahren und Werkzeug zur Erzeugung einer Wendelrillenstruktur in einem Grundkörper ist aus der WO 2010/015229 A1 bekannt. Im Unterschied zur WO 2010/015229 A1 schlägt die WO 2008/034419 A1 vor, die Oberfläche eines Grundkörpers mit einem zwei zueinander versetzt angeordnete Schneiden aufweisenden Werkzeug spanabhebend unter Ausbildung eines ersten bzw. zweiten Hinterschnittes zu bearbeiten, wobei die in die Oberfläche eingebrachten Hinterschnitte zueinander entgegengesetzt orientiert ausgerichtet sein sollen. Die Hinterschnitte können durch geometrisch bestimmte Schneiden erzeugt werden, beispielsweise mit Wendeschneidplatten, die an einem gemeinsamen oder verschiedenen Werkzeugträgern mit unterschiedlichen Einstellwinkeln zueinander orientiert sind. Durch den ersten Hinterschnitt kann ein sägezahnartiger Querschnitt ausgebildet werden, beispielsweise indem eine Schneide einer Wendeschneidplatte eine hinterschnittene, im Wesentlichen dreieckige Kontur einer Einkerbung oder eines Schnittkanals in den Grundkörper einbringt. Aus Symmetriegründen und zur Verringerung des logistischen Aufwandes hinsichtlich der Werkzeuge soll der zweite Hinterschnitt ebenfalls einen sägezahnartigen Querschnitt ausbilden, wodurch letztlich eine entsprechende Kontur in die Oberfläche des Grundkörpers eingebracht wird. Wenn die beiden Hinterschnitte die gleiche Kontur aufweisen, was angestrebt ist, ergibt die Überdeckung der beiden Konturen der beiden nacheinander ausgeführten, spanabhebenden Schnitte die gewünschte Kontur mit zwei gegensinnig ausgerichteten Hinterschnitten. Die beiden spanabhebenden Schneiden können auf einem gemeinsamen Werkzeugträger angeordnet sein, wobei dann die Vorschubgeschwindigkeit so gewählt wird, dass die zweite Schneide eine Schneidbahn mit einem festen Abstand und in einem festen Winkel zu der Schneidbahn der ersten Schneide erzeugt und lediglich denjenigen Materialanteil aus dem Grundkörper entfernt, der bei dem ersten Schneidvorgang, beispielsweise beim Ausbohren, Drehen oder Stossen bzw. Hobeln, noch nicht entfernt wurde. Wenn die Hinterschnitte in einem Ausbohr- oder Drehverfahren in eine zylindrische Oberfläche eingebracht werden, werden die Schneidvorgänge ähnlich einem Gewindeschnitt ausgeführt, indem die Schneiden eine wendelartige Bewegung ausführen. Um die Produktivität und Prozesssicherheit zu steigern, ist ferner vorgesehen, dass mehrere Schneiden gleicher Orientierung auf einem Werkzeugträger angeordnet sind und mehrere zueinander beabstandete Schneidbahnen gleicher Orientierung während eines Schneidvorganges eingebracht werden. Ähnlich einem mehrgängigen Gewinde werden so mehrere Hinterschnitte oder Schneidbahnen gleichzeitig in den Grundkörper eingebracht, wenn sämtliche Schneiden in Eingriff mit dem Grundkörper stehen. Der Vorschub ist dabei so bemessen, dass die Schneiden nicht in die Schneidbahn der vorlaufenden Schneide oder Schneiden eingreifen, sondern versetzt dazu verlaufen. Dadurch soll die Bearbeitungszeit pro Aufspannung wesentlich verkürzt werden können. Alternativ dazu wird in der WO 2008/034419 A1 vorgeschlagen, dass der erste Hinterschnitt mit einer Schneide mit einer ersten Orientierung in den Grundkörper eingebracht wird. Anschließend soll die Orientierung dieser Schneide verändert werden, beispielsweise indem eine Wendeschneidplatte um einen festgelegten Winkel verdreht wird. Abschließend soll in einem zweiten Schneidvorgang der zweite Hinterschnitt mit entgegengesetzter Orientierung in den Grundkörper eingebracht werden, wobei bei einer ebenen Oberfläche der Orientierungswechsel zwischen dem Vorwärtshub und dem Rückhub erfolgen kann, so dass kein Leerhub erfolgt. Ein Orientierungswechsel kann dabei automatisch erfolgen. Bei einer Oberflächenbehandlung zylindrischer Oberflächen soll die Einbringung des zweiten Hinterschnittes ebenfalls während des Rückhubs beispielsweise des Ausbohrwerkzeuges erfolgen können, ggf. mit einer Änderung der Rotationsrichtung. Auch dabei sollen der erste und zweite Hinterschnitt einander überlagern können, so dass am Ende der Oberflächenbehandlung ein gemeinsames Profil mit zwei Hinterschnitten entsteht.

Die DE 10314249 B3, die ein Verfahren gemäß dem Oberbegriff des Anspruchs 1 und ein Rillenformwerkzeug gemäß dem Oberbegriff des Anspruchs 10 offenbart, beschreibt ebenfalls ein Verfahren zur Vorbereitung einer Oberfläche, welche zum späteren Beschichten mit einer thermisch gespritzten Schicht vorgesehen wird. Bei dem beschriebenen Verfahren wird aus der Oberfläche Material spanend entfernt. Durch die Materialentfernung wird die Oberfläche mit einem Relief aus sich kreuzenden Riefen versehen. Die Riefen werden mit Hilfe einer Fräsleiste erzeug, die beim Einbringen in eine Zylinderbohrung eingedreht und gleichzeitig entlang der Zylinder- oder Bohrungsachse abwärts bewegt wird. Ist die gewünschte Tiefe in der Bohrung erreicht, wird die Fräsleiste entlang der Bohrungsachse herausgezogen, wobei sie mit gleichbleibender Drehrichtung weiter gedreht wird, wodurch in die Oberfläche-Kreuzriefen eingebracht werden.

Weitere Verfahren und/oder Werkzeuge zum Aufrauen zylindrischer Oberflächen metallischer Werkstücke sind aus der DE 202009014180 U1, WO 2007/087989 A1, DE 19802842 A1, DE 10348419B3, DE 19713519 A1, EP 1759133 B1, WO 02/40850 A1, US 5,622,753 oder DE 102006004769 A1 bekannt.

Allen bekannten Verfahren und Werkzeugen ist gemeinsam, dass zum Aufrauen der zu beschichtenden zylindrischen Oberfläche eine definierte, im Besonderen schwalbenschwanzartig hinterschnittene Nut- oder Rillenstruktur erzeugt wird, indem ein drehend angetriebenes Form- und/oder Schneidwerkzeug mit einem axialen Vorschub relativ zu der aufzurauenden Werkstückoberfläche bewegt wird. Die Dreh- und Axialbewegung des Werkzeugs relativ zur Werkstückoberfläche resultiert in einer wendelartigen oder kreuzartig ausgebildeten Nut- oder Rillenstruktur an der Werkstückoberfläche. Die hierfür erforderliche Abstimmung der Vorhub- und Rückhubbewegungen des Werkzeugs erfordert jedoch sowohl in steuerungstechnischer als auch zeitlicher Hinsicht einen hohen Aufwand, um eine zu erzeugende Mikrostruktur mit gleichbleibender Qualität und Genauigkeit herstellen zu können.

Vor dem Hintergrund des diskutierten Standes der Technik liegt der Erfindung die Aufgabe zugrunde, ein Verfahren und ein Werkzeug zum mechanischen Aufrauen einer zylindrischen Oberfläche eines insbesondere metallischen Werkstücks, im Besonderen der Kolbenlauffläche einer Zylinderlaufbuchse in einem Zylinderkurbelgehäuse z.B. aus Aluminiumguss, bereitzustellen, mit dem sich eine definierte Mikrostruktur aus sich kreuzenden Rillen als Haftgrundlage für eine später z.B. durch thermisches Spritzen aufzutragende Oberflächenschicht wirtschaftlich und mit geringster Streuung reproduzierbar herstellen lässt.

Diese Aufgabe wird durch ein Verfahren mit den Merkmalen des Anspruchs 1 oder ein Rillenformwerkzeug mit den Merkmalen des Anspruchs 10 gelöst. Bevorzugte Ausführungsformen sind Gegenstand abhängiger Ansprüche.

Ein erfindungsgemäßes Verfahren weist gemäß Anspruch 1 folgende Arbeitsgänge auf:
a) einen ersten Arbeitsgang, in dem das Rillenformwerkzeug in der Weise axial entlang der Werkstückoberfläche bewegt wird, dass in der Werkstückoberfläche wenigstens eine Axialrille eingearbeitet wird,
b) einen an den ersten Arbeitsgang anschließenden zweiten Arbeitsgang, in dem das Rillenformwerkzeug in der im ersten Arbeitsgang erreichten axialen Position um einen vorgegebenen Drehwinkel um die Zylinderachse gedreht wird, wodurch in die Werkstückoberfläche wenigstens eine die Axialrille kreuzende Umfangsrille eingearbeitet wird, und
c) einen an den zweiten Arbeitsgang anschließenden dritten Arbeitsgang, in dem das Rillenformwerkzeug axial entlang der Werkstückoberfläche zurück gezogen wird.

Erfindungsgemäß wird das Rillenformwerkzeug im ersten Arbeitsgang, d.h. während des Werkzeugvorhubs, rein axial vorwärts bewegt, in dem an den ersten Arbeitsgang anschließenden zweiten Arbeitsgang rein gedreht, und in dem an den zweiten Arbeitsgang anschließenden dritten Arbeitsgang, d.h. während des Werkzeugrückhubs, rein axial zurück bewegt. Der Werkzeugvorhub im ersten Arbeitsgang ist vorzugsweise größer als die axiale Erstreckung der zu bearbeitenden Werkstückoberfläche, so dass die wenigstens eine im ersten Arbeitsgang in die Werkstückoberfläche eingearbeitete Axialrille sich über die gesamte Länge der zylindrischen Werkstückoberfläche erstreckt, d.h. axial durchgängig ist. Der Werkzeugrückhub, d.h. die Wegstrecke des Rillenformwerkzeugs im dritten Arbeitsgang, entspricht vorteilhaft dem Werkzeugvorhub, d.h. der Wegstrecke des Rillenformwerkzeugs im ersten Arbeitsgang, so dass das Rillenformwerkzeug nach Durchlauf des ersten bis dritten Arbeitsgangs zumindest in einer axialer Projektion in Werkzeugvorhubrichtung gesehen wieder an seinem Ausgangspunkt angelangt ist. Der dritte Arbeitsgang kann leer erfolgen, d.h. ohne eine weitere Bearbeitung der Werkstückoberfläche. Alternativ dazu kann im dritten Arbeitsgang eine im ersten Arbeitsgang ausgebildete Axialrille weiter, d.h. auf ein Endmaß oder einen Endquerschnitt hin, bearbeitet werden.

In jedem Fall bestehen die drei Arbeitsgänge des erfindungsgemäßen Verfahrens aus reinen Axial- oder Drehbewegungen des Rillenformwerkzeugs relativ zur Werkstückoberfläche. Diese Bewegungen sind steuerungstechnisch einfach und mit geringstem Zeitaufwand zu realisieren. Im Ergebnis wird durch das erfindungsgemäße Verfahren an der Werkstückoberfläche eine Mikrorillenstruktur erhalten, die durch wenigstens eine Axialrille und wenigstens eine Umfangsrille definiert ist, die quer zu der wenigstens einen Axialrille verläuft. Die die Mikrostruktur bildenden Rillen haben eine sehr kleine Tiefe, z.B. im Bereich von 0,05 bis 0,15 mm, etwa von 0,05 bis 0,07 mm, im Besonderen etwa 0,06 mm, und Breite, z.B. im Bereich von 0,10 bis 0,20, etwa 0,13 bis 0,17 mm. Im Unterschied zu der z.B. aus der DE 10314249 B3 bekannten kreuzreliefartigen Mikrostruktur schneiden sich die wenigstens eine Axialrille und die wenigstens eine Umfangsrille jedoch stets rechtwinklig.

Das im einfachsten Fall aus genau dem ersten bis dritten Arbeitsgang bestehende Aufrauverfahren lässt sich besonders wirtschaftlich und mit geringstem Zeitaufwand ausführen, weil sich die Bewegungen (Vorhub, Drehung, Rückhub) des Rillenformwerkzeugs auf steuerungstechnisch einfach zu beherrschende Axial- oder Drehbewegungen des Rillenformwerkzeugs reduzieren. Sofern im dritten Arbeitsgang keine weitere Bearbeitung mehr erfolgt, kann der Werkzeugrückhub kann mit einer höheren Geschwindigkeit ausgeführt werden als der Werkzeugvorhub, wodurch der zeitliche Aufwand für die Durchführung des erfindungsgemäßen Verfahrens gering gehalten werden kann. Erfindungsgemäß lässt sich also eine definierte Mikrorillenstruktur mit geringster Streuung reproduzierbar und wirtschaftlich herstellen, die durch die resultierende Gitterstruktur sowohl in Axialrichtung als auch in Umfangsrichtung eine optimale Haftung oder Verzahnung für eine z.B. durch thermisches Spritzen aufzutragende Oberflächenschicht ermöglicht.

Die Mikrorillenstruktur lässt sich spanlos und/oder spanend formen. Das zu diesem Zweck verwendete Rillenformwerkzeug kann daher als ein reines Umform- oder Schneidwerkzeug ausgebildet sein oder als ein Werkzeug, das die vorgenannten Bearbeitungsformen Schneiden (z.B. durch Räumen, Stoßen, Stechen, Fräsen, Honen, etc.), und Umformen (durch Prägen, Eindrücken) kombiniert. Diese Bearbeitungsformen lassen sich ohne weiteres durch Vorsehen entsprechender Zahnkonturen am Rillenwerkzeug realisieren, die den gewünschten Querschnittsabmessungen der Axial- und Umfangsrillen entsprechend filigran ausgebildet sind.

Das Rillenformwerkzeug kann beispielsweise so ausgeführt sein, dass an einem Trägerkörper in Übereinstimmung mit der Anzahl der im ersten Arbeitsgang zu erzeugenden Axialrillen sowie deren radialer Lage und Verteilung um Zylinderachse wenigstens eine achsparallel verlaufende Zahnreihe aus in axialer Richtung nacheinander angeordneten Zähnen zur Formung der Axial- und Umfangsrillen angeordnet sind. Die Bezeichnung "Zahn" bezieht sich allgemein auf eine zahnförmige Kontur zur Formung einer Axial- oder Umfangsrille und gilt daher für jede der oben genannten spanlosen und spanenden Bearbeitungen. Ein "Zahn" hat daher eine geometrisch bestimmte oder geometrische unbestimmte Schneide für eine spanende Rillenbearbeitung, z.B. in der Art eines Stoßzahns eines Nutenstoßwerkzeugs, eines Schneidzahns, einer Räumnadel oder eines Honsteins eines Honwerkzeugs, etc., oder eine Kontur für eine spanlose, umformende Rillenbearbeitung des Werkstückmaterials. Die in ein und derselben axialen Reihe angeordneten Zähne können an einem oder mehreren axial nacheinander angeordneten Elementen, z.B. Einsätzen, Platten, Leisten oder dergleichen ausgebildet sein, die durch Verschraubung, Klemmung, Kleben, Löten, etc. am Trägerkörper auswechselbar oder dauerhaft fest angebracht sind. Diese Elemente sind vorzugsweise in außenumfangsseitig offenen Aufnahmetaschen am Außenumfang des Trägerkörpers angeordnet und mit dem Trägerkörper verschraubt oder gegen den Trägerkörper geklemmt. Vorteilhaft sind der oder die Axialzähne, die zur Erzeugung einer Axialrille dienen, und der oder die Umfangszähne, die zur Erzeugung einer Umfangsrille dienen, an verschiedenen Elementen ausgebildet.

Das Rillenformwerkzeug kann also eine oder mehrere axiale Zahnreihen aufweisen, die jeweils in achsparalleler Anordnung einen oder mehrere Zähne zur Erzeugung einer Axialrille (Axialzähne) sowie einen oder mehrere Zähne zur Erzeugung einer oder mehrerer Umfangsrillen (Umfangszähne) umfasst. Für den Fall, dass in ein und derselben Zahnreihe mehrerer Axialzähne vorgesehen sind, sind diese wie bei einem Folgewerkzeug axial gestaffelt in der Weise angeordnet, dass sie eine Axialrille sukzessive auf ein vorgegebenes Endmaß und/oder einen vorgegebenen Endquerschnitt ausbilden. Durch die sukzessive Ausbildung des Axialrillenquerschnitts kann dafür gesorgt werden, dass die aufeinanderfolgend mit dem Werkstück in Eingriff kommenden Axialzähne nicht allzu stark belastet werden. Im Unterschied zu den Axialzähnen bildet jeder Umfangszahn einer Zahnreihe eine andere Umfangsrille aus. Für den Fall, dass in ein und derselben Zahnreihe mehrere Umfangszähne vorgesehen sind, sind diese kammartig angeordnet. Jeder Umfangszahn ist jedoch so ausgebildet, dass er, in einer axialer Projektion in Werkzeugvorhubrichtung gesehen gesehen, innerhalb des Querschnitts der Axialrille liegt, die der oder die in Werkzeugvorhubrichtung vorauslaufenden Axialzähne formen, oder anders ausgedrückt, dass der Querschnitt jedes Umfangszahns, in einer axialer Projektion in Werkzeugvorhubrichtung gesehen gesehen, innerhalb des Querschnitts liegt, den der oder die Axialzähne bilden.

Die oben diskutierten Bewegungen des Rillenformwerkzeugs lassen sich mit Hilfe einer herkömmlichen NC- oder CNC-gesteuerten Werkzeugmaschine relativ einfach ausführen und steuern. Zu diesem Zweck kann der Trägerkörper des Rillenformwerkzeugs einen Spannschaft, z.B. einen an sich bekannten HSK-, SK- oder Zylinderschaft, aufweisen, über das Rillenwerkzeug in an sich bekannter Weise an eine Trenn- oder Schnittstelle eines z.B. modularen Werkzeugmaschinensystems angeschlossen werden kann.

Bei dem erfindungsgemäßen Verfahren kann gemäß Anspruch 2 der Werkzeugvorhub im ersten Arbeitsgang größer sein als die axiale Erstreckung der zu bearbeitenden Werkstückoberfläche. Wenn der Werkzeugvorhub im ersten Arbeitsgang größer ist als die axiale Erstreckung der zu bearbeitenden Werkstückoberfläche, erstreckt sich die dabei erzeugte wenigstens eine Axialrille stets über die gesamte Länge der Werkstückoberfläche. Gleichzeitig wird ermöglicht, dass der oder die Axialzähne des Rillenformwerkzeugs am Ende des ersten Arbeitsgangs axial außerhalb des Werkstücks und damit außer Eingriff mit dem Werkstück sind. Die Umfangsrillen lassen sich dann allein über den oder die axial hinter dem oder den Axialzähnen liegenden Umfangszähne formen. Es lässt sich dadurch erreichen, dass der oder die Axialzähne bei der Drehung des Rillenformwerkzeugs im zweiten Arbeitsgang komplett außerhalb der zylindrischen Oberfläche sind und dadurch nicht mehr beansprucht werden.

Des Weiteren kann gemäß Anspruch 3 der oben erwähnte vorgegebene Drehwinkel ein ganzzahliges Vielfaches eines Winkel betragen, der sich aus der Division von 360° als Dividend und der Zahl der wenigstens einen Axialrille als Divisor ergibt. Bei einer Drehung des Rillenformwerkzeugs um z.B. 360° wird jede im ersten Arbeitsgang geformte Axialrille erneut durchlaufen. Unabhängig von der Anzahl der Axialrillen wird durch eine 360° Drehung sichergestellt, dass die wenigstens eine Umfangsrille stets einen geschlossenen Kreisring bildet.

Gemäß Anspruch 4 können im Falle mehrerer Axialrillen diese in Umfangsrichtung um die Zylinderachse vorzugsweise äquidistant verteilt sein.

Gemäß Anspruch 5 kann im ersten Arbeitsgang in die Werkstückoberfläche wenigstens ein Paar diametral gegenüberliegender Axialrillen geformt wird. Das Rillenformwerkzeug hat in diesem Fall also wenigstens ein Paar, vorzugsweise zwei oder drei Paare, diametral gegenüberliegender Zahnreihen am Trägerkörper, die in Umfangsrichtung um die Zylinderachse vorzugsweise äquidistant verteilt angeordnet sind. In der Summe können im ersten Arbeitsgang also gleichzeitig zwei, vier, sechs, etc. Axialrillen erzeugt werden. Dabei können verschiedene, im Besonderen zwei diametral gegenüberliegende, Zahnreihen axial so angeordnet und ausgebildet sein, dass die Umfangszähne der verschiedenen, im Besonderen der beiden diametral gegenüberliegenden, Zahnreihen dieselbe bzw. dieselben Umfangsrillen formen.

Gemäß Anspruch 6 kann der vorgegebene Drehwinkel vorzugsweise 180° oder 360° betragen.

Durch eine 180°-Drehung des Rillenformwerkzeugs wird erreicht, dass im dritten Arbeitsgang jede der beiden im ersten Arbeitsgang geformten diametral gegenüberliegenden Axialrillen erneut, allerdings von einer anderen Zahnreihe des Rillenformwerkzeugs durchlaufen wird. Daher können die diametral gegenüberliegenden Axialrillen im ersten und dritten Arbeitsgang durch zwei verschiedene Zahnreihen sukzessive auf ein vorgegebenes Endmaß bzw. einen vorgegebenen Endquerschnitt, beispielsweise einen schwalbenschwanzförmigen Querschnitt, geformt werden. Beispielsweise kann die eine der beiden Zahnreihen die eine Flanke jeder Axialrille und die andere der beiden Zahnreihen die andere Flanke jeder Axialrille formen.

Alternativ dazu können die beiden Axialrillen bereits im ersten Arbeitsgang auf dasselbe vorgegebene Endmaß oder denselben vorgegebenen Endquerschnitt hin geformt werden. In diesem Fall kann das Rillenformwerkzeug im zweiten Arbeitsgang um 180° oder 360° gedreht werden.

Durch eine 360°-Drehung hat das Rillenformwerkzeug am Ende des zweiten Arbeitsgangs stets dieselbe Drehlage wie am Ende des ersten Arbeitsgangs bzw. vor dem zweiten Arbeitsgang. Da aber jede Umfangszahn eine 360° Drehung ausführt, ist es möglich, ein und dieselbe Umfangsrille durch die Umfangszähne zweier diametral gegenüberliegenden Zahnreihen sukzessive auf ein vorgegebenes Endmaß oder einen vorgegebenen Endquerschnitt hin zu formen. Beispielsweise kann ein Umfangszahn der einen Zahnreihe die eine der beiden Flanken einer Umfangsrille und ein Umfangszahn der anderen Zahnreihe die andere der beiden Flanken derselben Umfangsrille bearbeiten.

Gemäß Anspruch 7 können die Axial- und/oder Umfangsrillen sukzessive auf ein definiertes Endmaß oder einen definierten Endquerschnitt hin geformt werden.

Gemäß Anspruch 8 können die die Axial- und/oder Umfangsrillen dabei schwalbenschwanzförmig hinterschnitten werden.

Gemäß Anspruch 9 kann das erfindungsgemäße Verfahren einen vierten Arbeitsgang d) aufweisen, in dem das Rillenformwerkzeug relativ zum Werkstück erneut um einen vorgegebenen, vom Drehwinkel des zweiten Arbeitsgangs verschiedenen Drehwinkel um die Zylinderachse der Werkstückoberfläche gedreht wird. Anschließend können der erste bis dritte Arbeitsgang erneut ausgeführt werden. Es lassen sich daher weitere Axialrillenpaare erzeugen.

Ein erfindungsgemäßes Rillenformwerkzeug hat gemäß Anspruch 10 einen Trägerkörper, der wenigstens eine achsparallel angeordnete Zahnreihe trägt, wobei die wenigstens eine Zahnreihe in axialer Richtung nacheinander wenigstens einen Axialzähne zur Formung einer Axialrille und wenigstens einen Umfangszahn zur Formung einer oder mehrerer Umfangsrillen umfasst, und der Querschnitt jedes Umfangszahns, in einer axialer Projektion in Werkzeugvorhubrichtung gesehen gesehen, innerhalb des Querschnitts des wenigstens einen Axialzahns liegt.

Gemäß Anspruch 11 hat der wenigstens eine Axialzahn, in einer axialer Projektion in Werkzeugvorhubrichtung gesehen gesehen, einen schwalbenschwanzförmigen Querschnitt.

Gemäß Anspruch 12 sind wenigstens zwei Axialzähne vorgesehen, die axial gestaffelt angeordnet sind und deren Querschnitte sich, in einer axialer Projektion in Werkzeugvorhubrichtung gesehen gesehen, zu einem definierten, vorzugsweise schwalbenschwanzförmigen, Gesamtquerschnitt überlagern. Beispielsweise formen die beiden Axialzähne je eine Flanke der Axialrille. Alternativ dazu können die wenigstens zwei Axialzähne die Axialrille sukzessive auf ein vorgegebenes Endmaß (Tiefe, Breite) und/oder einen vorgegebenen Endquerschnitt hin formen.

Gemäß Anspruch 13 sind die in ein und derselben Zahnreihe angeordneten Zähne vorzugsweise an einem oder mehreren axial nacheinander angeordneten Zahnelementen ausgebildet, die am Trägerkörper auswechselbar oder dauerhaft fest angebracht sind.

Gemäß Anspruch 14 sind vorzugsweise der wenigstens eine Axialzahn und der wenigstens eine Umfangszahn an verschiedenen Zahnelementen ausgebildet. Die verschiedenen Zahnkonturen lassen sich dadurch einfacher fertigen.

Gemäß Anspruch 15 kann das Rillenformwerkzeug mehrere Zahnreihen haben, die in Umfangsrichtung des Rillenformwerkzeugs vorzugsweise äquidistant verteilt sind.

Gemäß Anspruch 16 kann der wenigstens eine Umfangszahn, in Umfangsrichtung gesehen, einen schwalbenschwanzförmigen Querschnitt haben.

Gemäß Anspruch 17 kann das Rillenformwerkzeug wenigstens ein Paar diametral gegenüberliegender Zahnreihen aufweisen.

Gemäß Anspruch 18 können sich dabei der Querschnitt wenigstens eines Umfangszahns einer der beiden Zahnreihen und der Querschnitt wenigstens eines Umfangszahns der diametral gegenüberliegenden anderen der beiden Zahnreihen, in Umfangsrichtung gesehen, zu einem definierten, vorzugsweise schwalbenschwanzförmigen, Gesamtquerschnitt überlagern. Analog der obigen Beschreibung der gestaffelt angeordneten Axialzähne können zwei Umfangszähne diametral gegenüberliegender Zahnreihen je eine Flanke ein und derselben Umfangsrille formen.

Ein erfindungsgemäßes Rillenformwerkzeug kann gemäß Anspruch 19 des Weiteren einen Spannschaft, z.B. einen HSK-, SK- oder Zylinderschaft, zum Anschließen des Rillenwerkzeugs an eine Trenn- oder Schnittstelle eines z.B. NC-oder CNC gesteuerten Werkzeugmaschinensystems aufweisen.

Nachfolgend werden ein erfindungsgemäßes Verfahren und ein erfindungsgemäßes Rillenformwerkzeug mithilfe der beigefügten Zeichnungen vorgestellt, in denen:
die Figur 1 stark vereinfacht einen Ausgangszustand skizziert;
die Figur 2 stark vereinfacht einen ersten Arbeitsgang des erfindungsgemäßen Verfahrens skizziert;
die Figur 3 stark vereinfacht einen zweiten Arbeitsgang des erfindungsgemäßen Verfahrens skizziert;
die Figur 4 stark vereinfacht einen dritten Arbeitsgang des erfindungsgemäßen Verfahrens skizziert;
die Figur 5 in vereinfachter, perspektivischer Darstellung ein Ausführungsbeispiel eines erfindungsgemäßen Rillenformwerkzeugs zur Durchführung des in Figur 1 bis 4 skizzierten Verfahrens zeigt;
die Figur 6 in vergrößerter Darstellung einen in Figur 5 gestrichelt angegebenen Bereich eines Axialzahlängenabschnitts zeigt;
die Figur 7 in vergrößerter Darstellung einen in Figur 6 strichpunktiert angegbenen Umfangszahnlängenabschnitt zeigt;
die Figur 8 ähnlich zur Figur 7 einen anderen Umfangszahnlängenabschnitt zeigt;
die Figur 9 eine Stirnansicht des Rillenformwerkzeugs aus Figur 5 zeigt; und
die Figur 10 in vergrößerter Darstellung einen in Figur 9 strichpunktiert angegebenen Stirnabschnitt zeigt.

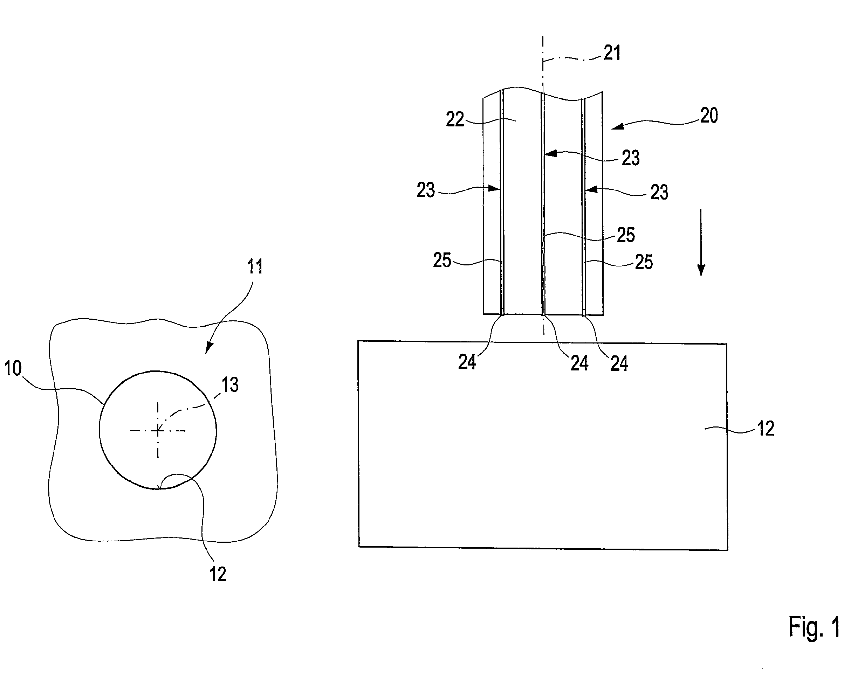

Im Folgenden werden zunächst mithilfe der Figuren 1 bis 4 die wesentlichen Arbeitsgänge eines erfindungsgemäßen Verfahrens skizziert sowie ein grundlegender Aufbau eines erfindungsgemäßen Rillenformwerkzeugs vorgestellt.

Figur 1 zeigt einen Ausgangszustand. Links unten ist stark vereinfacht eine Draufsicht auf eine Zylinderlaufbuchse 10 eines Zylinderkurbelgehäuses 11 (Werkstück) zu sehen. Die Innenoberfläche 12 der Zylinderlaufbuchse 10 bildet die aufzurauende Oberfläche. Figur 1 zeigt des Weiteren rechts unten eine Abwicklung der Innenoberfläche 12 der Zylinderlaufbuchse 10 sowie rechts oben schematisiert ein Rillenformwerkzeug 20. In dem in Figur 1 skizzierten Ausgangszustand ist das Rillenformwerkzeug 20 axial oberhalb der Zylinderlaufbuchse 10 positioniert und zwar so, dass eine Längsmittelachse 21 des Rillenformwerkzeugs 20 mit der Zylinderachse 13 der Zylinderlaufbuchse 10 übereinstimmt oder, anders ausgedrückt, das Rillenformwerkzeug 20 koaxial zur Zylinderlaufbuchse 10 ausgerichtet ist.

In dem in Figur 1 gezeigten Ausführungsbeispiel hat das Rillenformwerkzeug 20 sechs Zahnreihen 23, von denen in Figur 1 drei zu sehen sind. Die Zahnreihen 23 sind an einem zentralen Trägerkörper 22 parallel zur Längsmittelachse 21 angeordnet. Die Anzahl, radiale Lage und Umfangsverteilung der Zahnreihen 23 in Bezug auf die Längsmittelachse 21 stimmt mit der in die Innenoberfläche 12 einzuarbeitenden Axialrillen überein. Jede der Zahnreihen 23 lässt sich in funktionaler Hinsicht in zwei Längenabschnitte 24 und 25 unterteilen. Der in Werkzeugvorhubrichtung (siehe den Pfeil in Figur 1) vordere Längenabschnitt 24 umfasst wenigstens einen Zahn zur Formung einer Axialrille (im Folgenden: Axialzahn bzw. Axialzähne), während in Werkzeugvorhubrichtung hinter dem Längenabschnitt 24 liegende Längenabschnitt 25 jeder Zahnreihe 23 wenigstens einen, normalerweise aber eine Vielzahl von Zähnen zur Formung einer entsprechenden Vielzahl von Umfangsrille (im Folgenden: Umfangszahn bzw. Umfangszähne) umfasst. Die Bezugszeichen 24 und 25 in Figur 1 geben also wenigstens einen Axialzahn bzw. wenigstens einen Umfangszahn an.

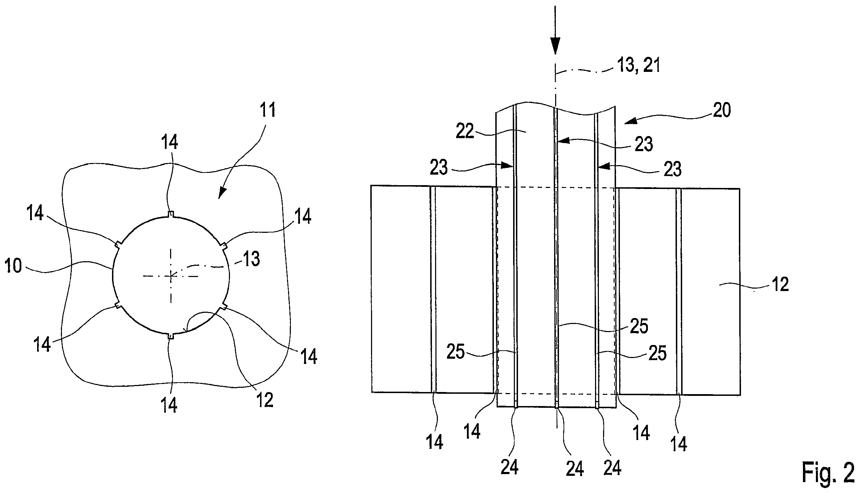

Für den Fall, dass in ein und derselben Zahnreihe mehrere, beispielsweise zwei, Axialzähne vorgesehen sind, sind diese wie bei einem Folgewerkzeug axial gestaffelt in der Weise nacheinander angeordnet, dass sie ein und dieselbe Axialrille sukzessive auf ein vorgegebenes Endmaß und/oder einen vorgegebenen Endquerschnitt ausbilden. Die mehreren Axialzähne können beispielsweise so ausgebildet sein, dass sie eine Axialrille sukzessive auf eine vorgegebene radiale Tiefe und/oder Umfangsbreite hin formen. Gleichzeitig oder alternativ dazu können die mehreren Axialzähne so ausgebildet sein, dass sie die Rillenflanken der Axialrille sukzessive auf einen vorgegeben Endquerschnitt hin formen. Der Endquerschnitt kann, wie in den Figuren 2 bis 4 skizziert, einfach rechteckförmig ausgebildet oder aber beispielsweise schwalbenschwanzförmig hinterschnitten sein. Ein hinterschnittener Querschnitt kann zu einer besseren Verzahnung einer später auf die aufgeraute Innenoberfläche 12 aufzutragenden Oberflächenbeschichtung mit der Zylinderlaufbuchse 10 beitragen.

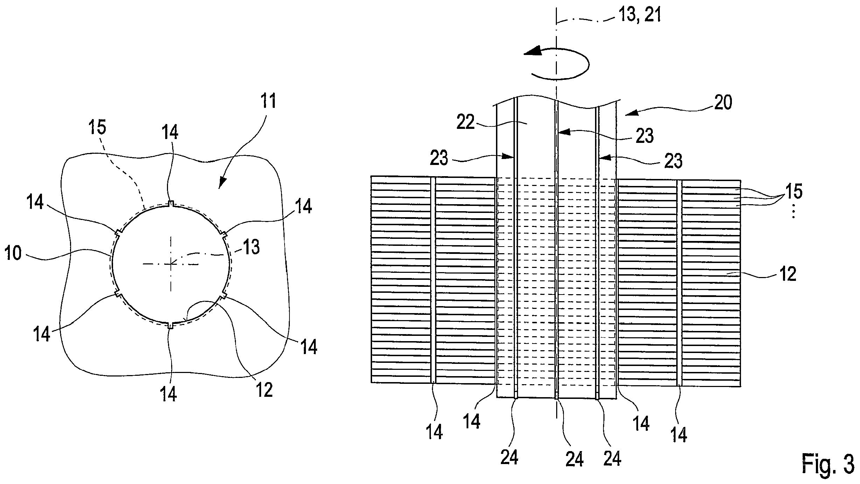

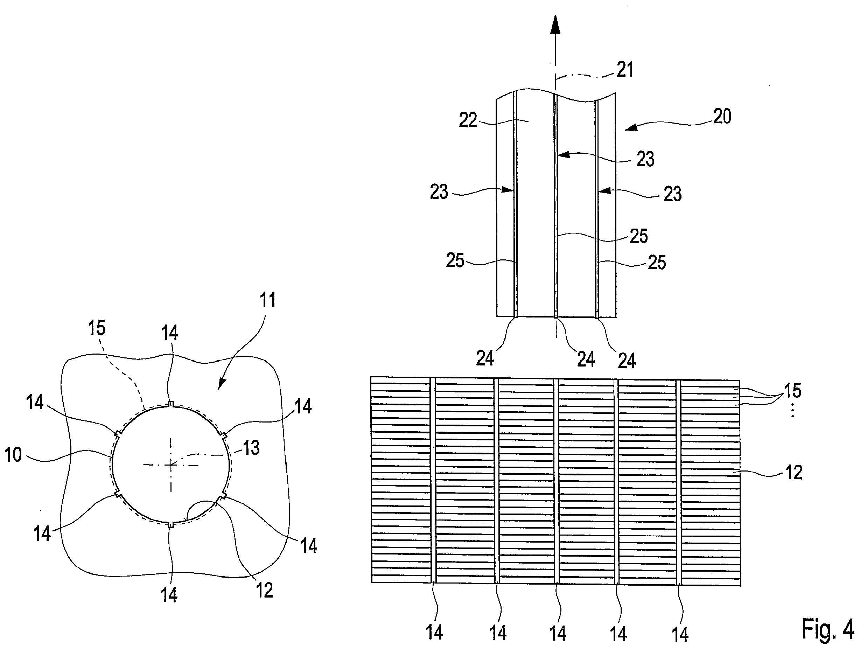

Im Unterschied zu den Axialzähnen bildet jeder Umfangszahn einer Zahnreihe eine andere Umfangsrille aus, wie es mithilfe der Figuren 3 und 4 noch erläutert wird. Für den Fall, dass in ein und derselben Zahnreihe 23 mehrere Umfangszähne vorgesehen sind, sind diese kammartig nacheinander angeordnet. Jeder Umfangszahn ist, in einer axialen Projektion in Werkzeugvorhubrichtung gesehen, jedoch so ausgebildet, dass sein Querschnitt innerhalb eines Querschnitts des wenigstens einen Axialzahns liegt. Für den Fall, dass eine Zahnreihe 23 genau einen Axialzahn hat, liegt der Querschnitt jedes nachfolgenden Umfangszahns, in der axialen Projektion gesehen, also innerhalb des Querschnitts des einen Axialzahns. Für den Fall, dass eine Zahnreihe 23 mehrere Axialzähne hat, liegt der Querschnitt jedes nachfolgenden Umfangszahns innerhalb eines als Überlagerungsquerschnitt bezeichneten Querschnitts, der sich, in der axialen Projektion gesehen, durch eine Überlagerung der Querschnitte jedes der mehreren Axialzähne ergibt. Durch diese Maßnahme ist sichergestellt, dass der oder die Umfangszähne bei der im ersten Arbeitsgang ausgeführten reinen Axialbewegung des Rillenformwerkzeugs 20 nicht mit der Zylinderlaufbuchse 10, also dem Werkstück, kollidieren, sondern innerhalb der Axialrille laufen, die der wenigstens eine, in Werkzeugvorhubrichtung vorauslaufende Axialzahn bereits geformt hat.

Unabhängig davon können die Umfangszähne einer Zahnreihe grundsätzlich denselben oder aber verschiedene Querschnitte haben. Im Sinne einer guten Verzahnung mit einer später auf die Innenoberfläche 12 aufzutragenden Oberflächenbeschichtung kann es von Vorteil sein, wenn die Umfangszähne einen schwalbenschwanzförmigen Querschnitt haben. Schwalbenschwanzförmig hinterschnittene Umfangsrillen lassen sich aber auch dadurch erzeugen, dass die Umfangszähne zweier diametral gegenüberliegender Zahnreihen gegensinnig orientiert sind und dadurch bei einer 360°-Drehung jeweils eine der beiden Flanken einer jeweiligen Umfangsrille formen.

Zu beachten gilt in diesem Zusammenhang, dass sich die Bezeichnung "Zahn" allgemein auf eine zahnförmige Kontur am Rillenwerkzeug, zur Formung einer Axial- oder Umfangsrille bezieht unabhängig davon, ob der betreffende Zahn für eine spanlose und spanende Bearbeitung ausgelegt ist. Ein "Zahn" hat daher eine geometrisch bestimmte oder geometrische unbestimmte Schneide für eine spanende Rillenbearbeitung, z.B. in der Art eines Stoßzahns eines Nutenstoßwerkzeugs, eines Schneidzahns, einer Räumnadel oder eines Honsteins eines Honwerkzeugs, etc., oder eine Kontur für eine spanlose, umformende Bearbeitung. Die durch das erfindungsgemäße Verfahren zu erzeugende Mikrorillenstruktur an der Innenoberfläche 12 der Zylinderlaufbuchse 11 lässt sich daher grundsätzlich spanlos und/oder spanend formen. Das Rillenformwerkzeug 20 kann daher als ein reines Umform- oder Schneidwerkzeug ausgebildet sein oder als ein Werkzeug, das die vorgenannten Bearbeitungsformen Schneiden (z.B. durch Räumen, Stoßen, Stechen, Fräsen, Honen, etc.), und Umformen (durch Prägen, Eindrücken) kombiniert.

Die in ein und derselben axialen Reihe angeordneten Zähne können an einem oder mehreren axial nacheinander angeordneten Elementen, z.B. Einsätzen, Platten, Leisten oder dergleichen ausgebildet sein, die durch Verschraubung, Klemmung, Kleben, Löten, etc. am Trägerkörper 22 des Rillenwerkzeugs 20 auswechselbar oder dauerhaft fest angebracht sind. Diese Elemente sind vorzugsweise in außenumfangsseitig offenen Aufnahmetaschen am Trägerkörper 22 angeordnet und mit dem Trägerkörper 22 verschraubt oder gegen den Trägerkörper 22 geklemmt. Vorteilhaft sind der wenigstens eine Axialzahn und der wenigstens eine Umfangszahn an verschiedenen, getrennten Elementen ausgebildet.

In dem in Figur 1 gezeigten Ausgangszustand ist die Innenoberfläche 12 der Zylinderlaufbuchse 10 noch unbearbeitet.

In dem in Figur 2 skizzierten ersten Arbeitsgang des erfindungsgemäßen Verfahrens wird das Rillenformwerkzeug 20 in der mit dem Pfeil angegeben Werkzeugvorhubrichtung axial entlang der Innenoberfläche 12 der Zylinderlaufbuchse 10 bewegt, wodurch der wenigstens eine Axialzahn jeder Zahnreihe 23 an der Innenoberfläche 12 eine Axialrille 14 formt. Das Rillenformwerkzeug 20 wird erfindungsgemäß soweit nach unten gefahren, dass am Ende der Bewegung bzw. des ersten Arbeitsgangs zumindest der wenigstens eine Axialzahn Figur 1b axial außerhalb der Zylinderlaufbuchse 10 positioniert ist, wie es in Figur 2 zu erkennen ist. Der Werkzeugvorhub ist also größer als die axiale Erstreckung der Zylinderlaufbuchse 10 bzw. der zu bearbeitenden Innenoberfläche 12. Die Axialrillen 14 sind also durchgängig. Sie erstrecken sich über die gesamte Länge der Zylinderlaufbuchse 10 bzw. der Innenoberfläche 12. Figur 2 zeigt das Ergebnis des ersten Arbeitsgangs. Zu sehen sind entsprechend der Zahl der Zahnreihen 23 sechs Axialrillen mit - der zeichnerischen Darstellung - jeweils einem rechteckigen Querschnitt.

Figur 3 skizziert den an den ersten Arbeitsgang anschließenden zweiten Arbeitsgang, in dem das Rillenformwerkzeug 20 in der im ersten Arbeitsgang erreichten axialen Position um einen vorgegebenen Drehwinkel, in dem skizzierten Beispiel von 360°, um die Zylinderachse 13 bzw. Längsmittelachse 21 gedreht wird, wodurch in die Innenoberfläche 12 des Weiteren eine der Anzahl der Umfangszähne 25 entsprechende Anzahl von Umfangsrillen 15 eingearbeitet werden, die die Axialrillen 14 rechtwinklig kreuzen. Figur 3 lässt eine Vielzahl von stark vereinfacht dargstellten Umfangsrillen 15 erkennen, die aufgrund der 360°-Drehung kreisringförmig sind. Weil die Axialzähne 24 jeder Zahnreihe 23 des Rillenformwerkzeugs 20 sich während des zweiten Arbeitsgangs axial außerhalb und damit außer Eingriff mit der Zylinderlaufbuchse 10 befinden, erfahren sie keinerlei Beanspruchung. Die Umfangsrillen 15 werden allein über den oder die axial Umfangszähne 25 geformt. Wie oben erwähnt, können dann, wenn die Umfangszähne zweier diametral gegenüberliegender Zahnreihen 23 gegensinnig orientiert sind, durch die 360°-Drehung die Umfangszähne der diametral gegenüberliegenden Zahnreihen 23 jeweils eine der beiden Flanken einer jeweiligen Umfangsrille z.B. mit einer schwalbenschwanzförmigen Hinterschneidung formen.

Figur 4 skizziert den an zweiten Arbeitsgang anschließenden dritten Arbeitsgang, in dem das Rillenformwerkzeug 20 in der im zweiten Arbeitsgang erreichten Drehposition axial entlang der Innenoberfläche 12 der Zylinderlaufbuchse 10 in der durch den Pfeil angegebenen Werkzeugrückhubrichtung wieder in seine dem Ausgangszustand entsprechende Ausgangsposition zurück gezogen wird.

Zusammengefasst wird das Rillenformwerkzeug 20 erfindungsgemäß im ersten Arbeitsgang, d.h. während des Werkzeugvorhubs, also rein axial vorwärts bewegt, in dem an den ersten Arbeitsgang anschließenden zweiten Arbeitsgang in der im ersten Arbeitsgang erreichten axialen Position rein gedreht, und in dem an den zweiten Arbeitsgang anschließenden dritten Arbeitsgang, d.h. während des Werkzeugrückhubs, in der im zweiten Arbeitsgang erreichten Drehposition rein axial zurück bewegt. Der Werkzeugvorhub im ersten Arbeitsgang ist vorzugsweise größer als die axiale Erstreckung der zu bearbeitenden Innenoberfläche 12, so dass die wenigstens eine im ersten Arbeitsgang in die Innenoberfläche 12 eingearbeitete Axialrille 14 sich über die gesamte Länge der zylindrischen Innenoberfläche 12 erstreckt, d.h. axial durchgängig ist. Der Werkzeugrückhub, d.h. die Wegstrecke des Rillenformwerkzeugs 20 im dritten Arbeitsgang, entspricht vorteilhaft dem Werkzeugvorhub, d.h. der Wegstrecke des Rillenformwerkzeugs 20 im ersten Arbeitsgang, so dass das Rillenformwerkzeug nach Durchlauf des ersten bis dritten Arbeitsgangs wieder in seiner Ausgangsposition angelangt ist. Der dritte Arbeitsgang erfolgt in dem skizzierten Verfahren leer, d.h. ohne eine weitere Bearbeitung der Innenoberfläche 12.

Die drei Arbeitsgänge des erfindungsgemäßen Verfahrens zeichnen sich daher durch reine Axial- oder Drehbewegungen des Rillenformwerkzeugs 20 relativ zur Innenoberfläche 12 aus. Diese Bewegungen sind steuerungstechnisch einfach und mit geringstem Zeitaufwand zu realisieren. Im Ergebnis wird durch das erfindungsgemäße Verfahren an der Werkstückoberfläche eine Mikrorillenstruktur erhalten, die durch wenigstens eine Axialrille und wenigstens eine Umfangsrille definiert ist, die quer zu der wenigstens einen Axialrille verläuft. Die die Mikrostruktur bildenden Rillen haben eine sehr kleine Tiefe, z.B. im Bereich von 0,05 bis 0,15 mm, etwa von 0,05 bis 0,07 mm, im Besonderen etwa 0,06 mm, und Breite, z.B. im Bereich von 0,10 bis 0,20, etwa 0,13 bis 0,17 mm.

Die oben diskutierten Bewegungen des Rillenformwerkzeugs 20 lassen sich mit Hilfe einer herkömmlichen NC- oder CNC-gesteuerten Werkzeugmaschine relativ einfach ausführen und steuern. Zu diesem Zweck hat der Trägerkörper 22 des Rillenformwerkzeugs 21 des Weiteren einen in den Figuren 1 bis 4 nicht gezeigten Spannschaft, z.B. einen an sich bekannten HSK-, SK- oder Zylinderschaft, über den das Rillenwerkzeug 20 in an sich bekannter Weise an eine Trenn- oder Schnittstelle eines z.B. modularen Werkzeugmaschinensystems angeschlossen werden kann.

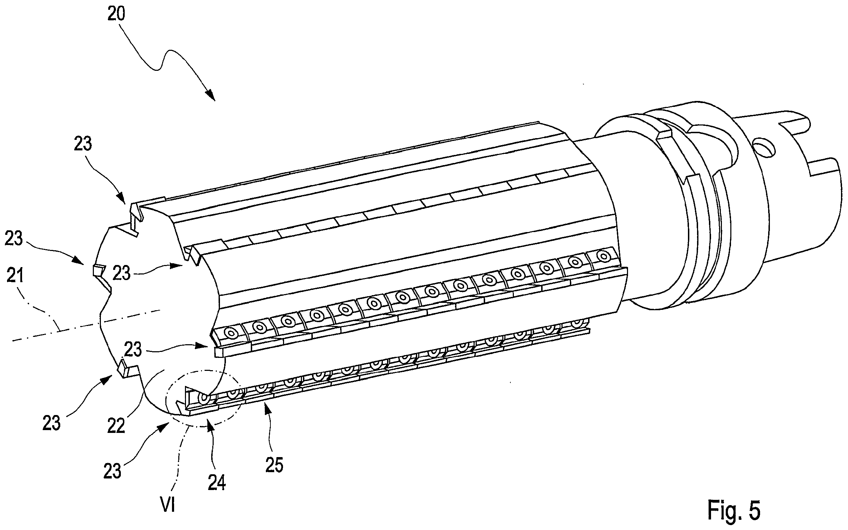

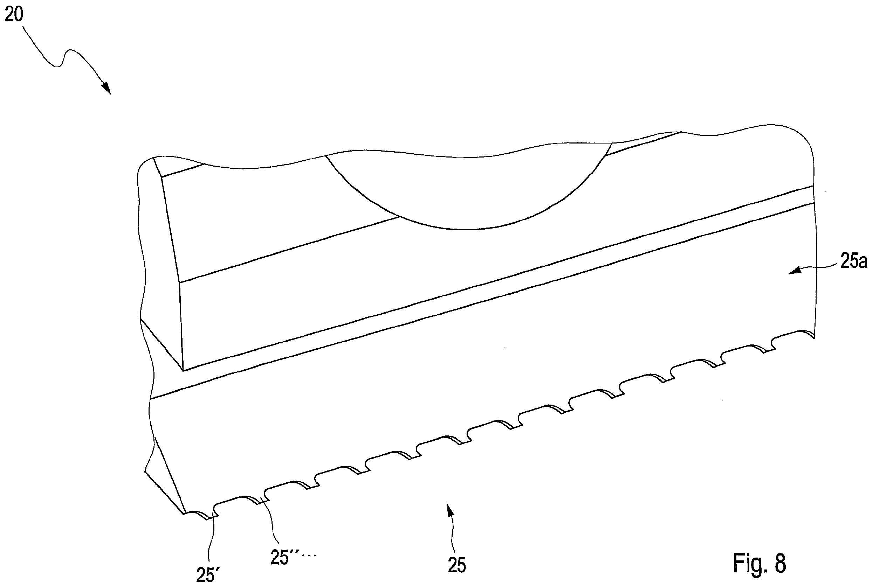

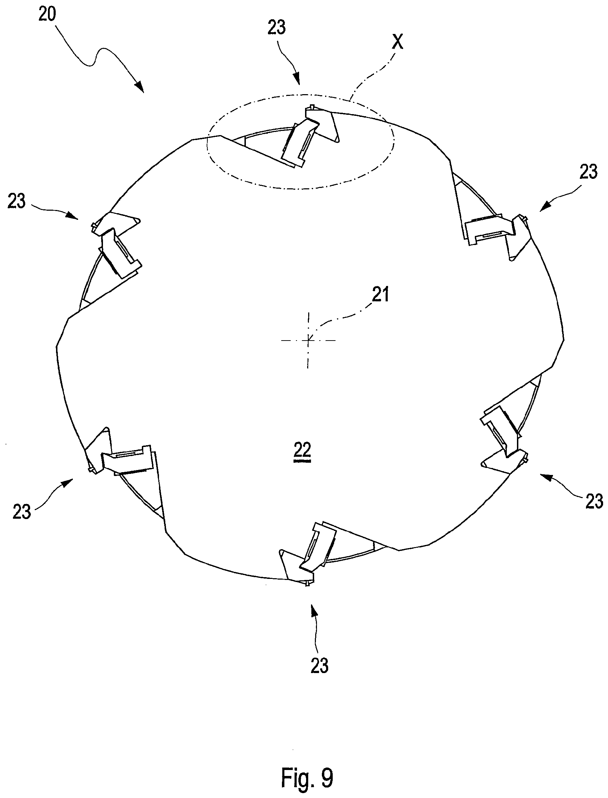

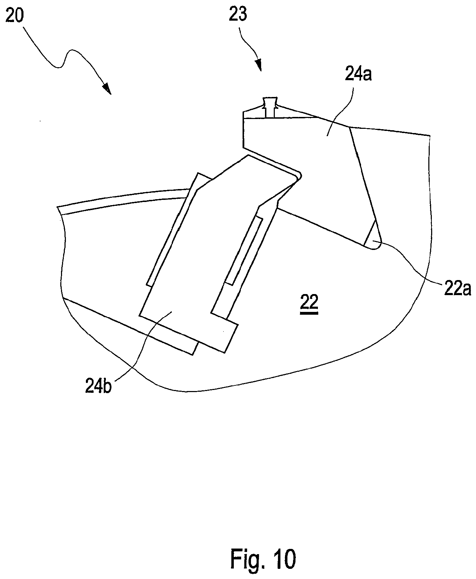

Die Figuren 5 bis 10 zeigen schematisch ein Ausführungsbeispiel eines erfindungsgemäßen Rillenformwerkzeugs zur Durchführung des in Figur 1 bis 4 skizzierten Verfahrens.

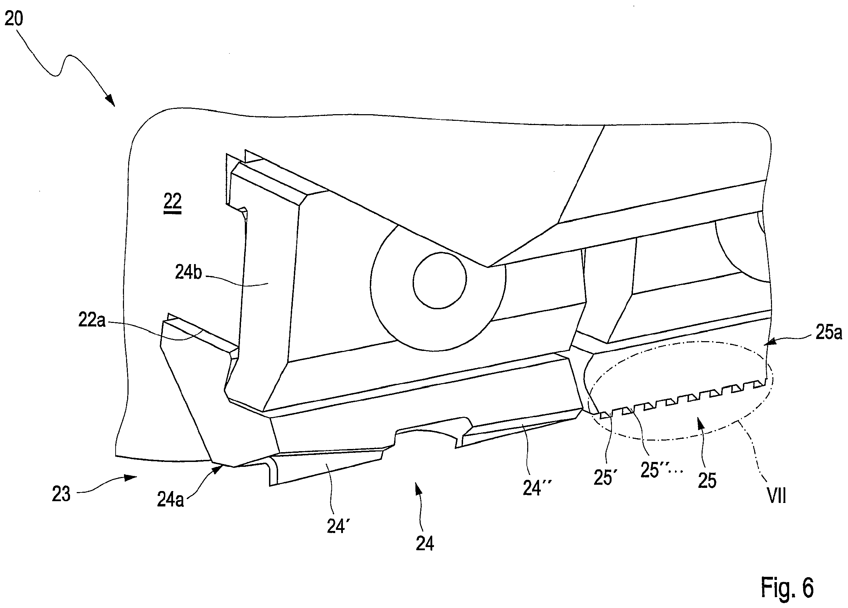

Gemäß Figur 6 hat das Rillenformwerkzeug 20 je Zahnreihe 23 zwei Axialzähne 24', 24", die wie bei einem Folgewerkzeug axial gestaffelt in der Weise angeordnet, dass sie ein und dieselbe Axialrille sukzessive auf ein vorgegebenes Endmaß und/oder einen vorgegebenen Endquerschnitt ausbilden. Die Axialzähne 24', 24" sind des Weiteren an einem leistenförmigen Zahnelement 24a ausgebildet, das durch Klemmung mithile einer Klemmpratze 24b lösbar am Trägerkörper 22 angebracht ist. Die Figur 6 lässt des Weiteren erkennen, dass das leistenförmige Zahnelement 24a in einer außenumfangsseitig offenen Aufnahmetasche 22a am Trägerkörper 22 angeordnet ist und mit dem Trägerkörper 22 verschraubt oder gegen den Trägerkörper 22 geklemmt. Des Weiteren sind bei dem Rillenformwerkzeug 20 je Zahnreihe 23 eine Vielzahl von Umfangszähnen 25', 25" usw. kammartig an einem von dem Zahnelement 24a verschiedenen leistenförmigen Zahnelement 25a ausgebildet, das analog dem Zahnelement 24a in einer nicht näher angegebenen außenumfangsseitig offenen Aufnahmetasche am Trägerkörper 22 angeordnet ist. In Figur 5 sieht man, dass das Rillenwerkzeug 20 je Zahnreihe 23 eine Vielzahl derartiger Zahnelement 25a jeweils mit einer Vielzahl von Umfangszähnen aufweist, die in axialer Reihe mit dem Zahnelement 24a angeordnet sind.

Figur 6 lässt erkennen, dass die Axial- und Umfangszähne 24, 25 jeder Zahnreihe 23 des gezeigten Rillenformwerkzeugs als Schneidzähne ausgebildet sind. Die Axialzähne 24 sind beispielsweise in der Art einer Räumnadel eines Räumwerkzeugs ausgebildet. Das in Figur 5 und 6 gezeigte Rillenformwerkzeug 20 stellt also ein rein spanendes Werkzeug mit geomtrisch bestimmten Schneidkonturen dar.

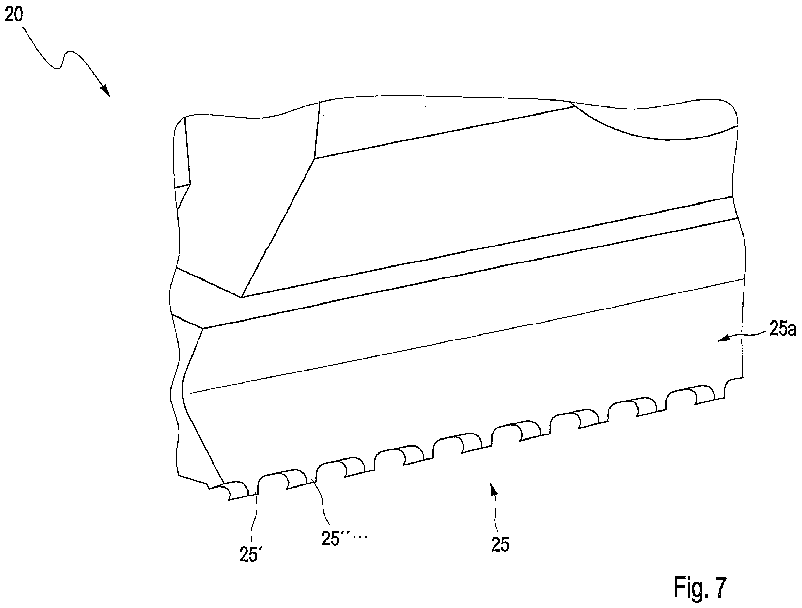

Die Figuren 7 bis 10 zeigen weitere Ansichten und Abschnitte des Rillenformwerkzeugs.

Wie eingangs ausgeführt, können die Axial- und/oder Umfangszähne alternativ zu dem in Figur 5 bis 10 gezeigten Rillenformwerkzeug aber auch für eine spanlose Bearbeitung, etc.ausgelegt sein. Des Weiteren können die in ein und derselben axialen Reihe angeordneten Zähne an einem oder mehreren axial nacheinander angeordneten Elementen, z.B. Einsätzen, Platten, Leisten oder dergleichen ausgebildet sein, die statt durch Klemmung durch Verschraubung, Kleben, Löten, etc. am Trägerkörper auswechselbar oder dauerhaft fest angebracht sind.

Des Weiteren können statt der gezeigten sechs Zahnreihen 23 weniger oder mehr Zahnreihen vorgesehen sein, die grundsätzlich äquidistanter oder auch in ungleicher Umfangsverteilung um die Längsmittelachse des Rillenformwerkzeugs angeordnet sein können. Je nach der Anzahl und Verteilung der Zahnreihen kann auch der Drehwinkel im zweiten Arbeitsschritt von 360° verschieden sein. Gemäß Anspruch 4 können im Falle mehrerer Axialrillen diese in Umfangsrichtung um die Zylinderachse vorzugsweise äquidistant verteilt sein, wie dies eingangs bereits ausgeführt ist.

Weitere Abwandlungen und Modifikation des erfindungsgemäßen Verfahrens und Rillenformwerkzeugs ergeben sich für den Fachmann aus den Merkmalskombinationen der Ansprüche.

## Patentansprüche

1. Verfahren zum mechanischen Aufrauen einer zylindrischen Oberfläche eines insbesondere metallischen Werkstücks, z.B. der Kolbenlauffläche einer Zylinderlaufbuchse in einem Zylinderkurbelgehäuse, durch Erzeugen einer definierten Mikrostruktur aus sich kreuzenden Rillen mit Hilfe eines spanlos oder spanend arbeitenden Rillenformwerkzeugs, **dadurch gekennzeichnet, dass**
a) in einem ersten Arbeitsgang das Rillenformwerkzeug in der Weise axial entlang der Werkstückoberfläche bewegt wird, dass in der Werkstückoberfläche wenigstens eine Axialrille eingearbeitet wird,
b) in einem an den ersten Arbeitsgang anschließenden zweiten Arbeitsgang das Rillenformwerkzeug in der im ersten Arbeitsgang erreichten axialen Position um einen vorgegebenen Drehwinkel um die Zylinderachse gedreht wird, wodurch in die Werkstückoberfläche wenigstens eine die Axialrille kreuzende Umfangsrille eingearbeitet wird, und
c) in einem an den zweiten Arbeitsgang anschließenden dritten Arbeitsgang das Rillenformwerkzeug axial entlang der Werkstückoberfläche zurück gezogen wird.

2. Verfahren nach Anspruch 1, **dadurch gekennzeichnet, dass** der Werkzeugvorhub im ersten Arbeitsgang größer ist als die axiale Erstreckung der zu bearbeitenden Werkstückoberfläche.

3. Verfahren nach Anspruch 1 oder 2, **dadurch gekennzeichnet, dass** der vorgegebene Drehwinkel ein ganzzahliges Vielfaches eines Winkel beträgt, der sich aus der Division von 360° als Dividend und der Zahl der wenigstens einen Axialrille als Divisor ergibt.

4. Verfahren nach einem der vorhergehenden Ansprüche, **dadurch gekennzeichnet, dass** im Falle mehrerer Axialrillen diese in Umfangsrichtung um die Zylinderachse vorzugsweise äquidistant verteilt sind.

5. Verfahren nach einem der vorhergehenden Ansprüche, **dadurch gekennzeichnet, dass** im ersten Arbeitsgang in die Werkstückoberfläche wenigstens ein Paar diametral gegenüberliegender Axialrillen geformt wird.

6. Verfahren nach Anspruch 4 oder 5, **dadurch gekennzeichnet, dass** der vorgegebene Drehwinkel 180° oder 360° beträgt.

7. Verfahren nach einem der vorhergehenden Ansprüche, **dadurch gekennzeichnet, dass** die Axial- und/oder Umfangsrillen sukzessive auf ein definiertes Endmaß oder einen definierten Endquerschnitt hin geformt werden.

8. Verfahren nach einem der vorhergehenden Ansprüche, **dadurch gekennzeichnet, dass** die Axial- und/oder Umfangsrillen schwalbenschwanzförmig hinterschnitten werden.

9. Verfahren nach einem der vorhergehenden Ansprüche, **dadurch gekennzeichnet, dass**
d) in einem vierten Arbeitsgang das Rillenformwerkzeug relativ zum Werkstück erneut um einen vorgegebenen, vom Drehwinkel des zweiten Arbeitsgangs verschiedenen Drehwinkel um die Zylinderachse der Werkstückoberfläche gedreht wird, und
e) anschließend der erste bis dritte Arbeitsgang erneut ausgeführt werden.

10. Rillenformwerkzeug zum mechanischen Aufrauen einer zylindrischen Oberfläche eines insbesondere metallischen Werkstücks, z.B. der Kolbenlauffläche einer Zylinderlaufbuchse, durch Erzeugen einer definierten Mikrostruktur aus sich kreuzenden Rillen, im Besonderen nach einem der Ansprüche 1 bis 9, mit einem Trägerkörper, der wenigstens eine achsparallel angeordnete Zahnreihe trägt, **dadurch gekennzeichnet, dass**:
die wenigstens eine Zahnreihe in axialer Richtung nacheinander wenigstens einen Axialzähne zur Formung einer Axialrille und wenigstens einen Umfangszahn zur Formung einer oder mehrerer Umfangsrillen umfasst,
wobei der Querschnitt jedes Umfangszahns, in einer axialer Projektion in Werkzeugvorhubrichtung gesehen, innerhalb des Querschnitts des wenigstens einen Axialzahns liegt.

11. Rillenformwerkzeug nach Anspruch 10, **dadurch gekennzeichnet, dass** der wenigstens eine Axialzahn, in einer axialer Projektion in Werkzeugvorhubrichtung gesehen, einen schwalbenschwanzförmigen Querschnitt hat.

12. Rillenformwerkzeug nach Anspruch 10, **gekennzeichnet durch** wenigstens zwei Axialzähne, die axial gestaffelt angeordnet sind und deren Querschnitte sich, in einer axialen Projektion in Werkzeugvorhubrichtung gesehen, zu einem definierten, vorzugsweise hinterschnittenen, beispielsweise schwalbenschwanzförmigen, Überlagerungsquerschnitt überlagern.

13. Rillenformwerkzeug nach einem der Ansprüche 10 bis 12, **dadurch gekennzeichnet, dass** die in ein und derselben Zahnreihe angeordneten Zähne an einem oder mehreren axial nacheinander angeordneten Zahnelementen ausgebildet sind, die am Trägerkörper auswechselbar oder dauerhaft fest angebracht sind.

14. Rillenformwerkzeug nach Anspruch 13, **dadurch gekennzeichnet, dass** der wenigstens eine Axialzahn und der wenigstens eine Umfangszahn an verschiedenen Zahnelementen ausgebildet sind.

15. Rillenformwerkzeug nach einem der Ansprüche 10 bis 14, **gekennzeichnet durch** mehrere Zahnreihen, die in Umfangsrichtung des Rillenformwerkzeugs vorzugsweise äquidistant verteilt sind.

16. Rillenformwerkzeug nach einem der Ansprüche 10 bis 15, **dadurch gekennzeichnet, dass** der wenigstens eine Umfangszahn, in Umfangsrichtung gesehen, einen schwalbenschwanzförmigen Querschnitt hat.

17. Rillenformwerkzeug nach einem der Ansprüche 10 bis 16, **gekennzeichnet durch** wenigstens ein Paar diametral gegenüberliegender Zahnreihen.

18. Rillenformwerkzeug nach Anspruch 17, **dadurch gekennzeichnet, dass** sich der Querschnitt wenigstens eines Umfangszahns einer Zahnreihe und der Querschnitt wenigstens eines Umfangszahns der diametral gegenüberliegenden anderen Zahnreihe, in Umfangsrichtung gesehen, zu einem definierten, vorzugsweise schwalbenschwanzförmigen, Gesamtquerschnitt überlagern.

19. Rillenformwerkzeug nach einem der Ansprüche 10 bis 18, **gekennzeichnet durch** einen Spannschaft zum Spannen des Rillenwerkzeugs an eine Trenn- oder Schnittstelle eines Werkzeugmaschinensystems.

## Claims

1. A method for mechanically roughening a cylindrical surface of an in particular metallic workpiece, e.g., the piston bearing surface of a cylinder sleeve in a cylinder crankcase, by generating a defined microstructure of mutually crossing grooves by means of a non-cutting or cutting groove molding tool, **characterized in that**,
a) in a first operation, the groove molding tool is moved axially along the workpiece surface in such a way so as to introduce at least one axial groove into the workpiece surface;
b) in a second operation following the first operation, the groove molding tool in the axial position reached in the first operation is turned around the cylinder axis by a prescribed rotational angle, as a result of which at least one circumferential groove that crosses the axial groove is introduced into the workpiece surface, and
c) in a third operation following the second operation, the groove molding tool is retracted axially along the workpiece surface.

2. The method according to claim 1, **characterized in that** the forward tool stroke is larger than the axial extension of the workpiece surface to be machined.

3. The method according to claim 1 or 2, **characterized in that** the prescribed rotational angle measures an integral multiple of an angle obtained from dividing 360° as the dividend and the number of the at least one axial groove as the divisor.

4. The method according to one of the preceding claims, **characterized in that**, in the event of several axial grooves, the latter can be preferably equidistantly distributed around the cylinder axis in the circumferential direction.

5. The method according to one of the preceding claims, **characterized in that** at least one pair of diametrically opposing axial grooves is molded into the workpiece surface in the first operation.

6. The method according to claim 4 or 5, **characterized in that** the prescribed rotational angle measures 180° or 360°.

7. The method according to one of the preceding claims, **characterized in that** the axial and/or circumferential grooves are gradually molded toward a defined final dimension or a defined final cross section.

8. The method according to one of the preceding claims, **characterized in that** the axial and/or circumferential grooves are given a dovetailed undercut.

9. The method according to one of the preceding claims, **characterized in that**
d) in a fourth operation, the groove molding tool is again turned relative to the workpiece around the cylinder axis of the workpiece surface by a prescribed rotational angle differing from the rotational angle of the second operation, and
e) the first to third operations are subsequently performed once again.

10. A groove molding tool for mechanically roughening a cylindrical surface of an in particular metallic workpiece, e.g., the piston bearing surface of a cylinder sleeve in a cylinder crankcase, by generating a defined microstructure of mutually crossing grooves, in particular according to one of claims 1 to 9, with a carrier body that carries at least one axially parallel row of teeth, **characterized in that**:
the at least one row of teeth encompasses at least one axial tooth to form an axial groove and at least one circumferential tooth to form one or more circumferential grooves, both arranged one after the other in an axial direction,
wherein the cross section of each circumferential tooth as viewed in an axial projection in the forward tool stroke direction lies within the cross section of the at least one axial tooth.

11. The groove molding tool according to claim 10, **characterized in that** the at least one axial tooth as viewed in an axial projection in the forward tool stroke direction exhibits a dovetailed cross section.

12. The groove molding tool according to claim 10, **characterized by** at least two axial teeth, which are axially staggered and whose cross sections overlap as viewed in an axial projection in the forward tool stroke direction to form a defined, preferably undercut, for example dovetailed, overlapping cross section.

13. The groove molding tool according to one of claims 10 to 12, **characterized in that** the teeth arranged in one and the same row of teeth are formed on one or several tooth elements arranged axially one after the other, which are detachably or permanently secured to the carrier body.

14. The groove molding tool according to claim 13, **characterized in that** the at least one axial tooth and the at least one circumferential tooth are formed on different tooth elements.

15. The groove molding tool according to one of claims 10 to 14, **characterized by** several rows of teeth, which are preferably equidistantly distributed in the circumferential direction of the groove molding tool.

16. The groove molding tool according to one of claims 10 to 15, **characterized in that** the at least one circumferential tooth exhibits a dovetailed cross section as viewed in the circumferential direction.

17. The groove molding tool according to one of claims 10 to 16, **characterized by** at least one pair of diametrically opposed rows of teeth.

18. The groove molding tool according to claim 17, **characterized in that** the cross section of at least one circumferential tooth of one of the two rows of teeth and the cross section of at least one circumferential tooth of the diametrically opposing other one of the two rows of teeth overlap as viewed in the circumferential direction to form a defined, preferably dovetailed, overall cross section.

19. The groove molding tool according to one of claims 10 to 18, **characterized by** a clamping shaft for clamping the groove molding tool to a separation point or interface of a machine tool system.

## Revendications

1. Procédé pour augmenter mécaniquement la rugosité d'une surface cylindrique d'une pièce en particulier métallique, par exemple de la surface de roulement de piston d'une chemise de cylindre dans un bloc-moteur, par génération d'une microstructure définie en gorges se croisant à l'aide d'un outil de formation de gorges sans enlèvement de copeaux ou fonctionnant par enlèvement de copeaux, **caractérisé en ce que**
a) dans une première étape de travail, l'outil de formation de gorges est déplacé axialement le long de la surface de pièce de façon à ce qu'au moins une gorge axiale soit usinée dans la surface de pièce,
b) dans une deuxième étape de travail faisant suite à la première étape de travail, l'outil de formation de gorges dans la position axiale atteinte dans la première étape de travail est tourné d'un angle de rotation prédéfini autour de l'axe de cylindre, moyennant quoi au moins une gorge périphérique croisant la gorge axiale est usinée dans la surface de pièce, et
c) dans une troisième opération de travail faisant suite à la deuxième étape de travail, l'outil de formation de gorges est retiré axialement le long de la surface de pièce.

2. Procédé selon la revendication 1, **caractérisé en ce que** la pré-course de l'outil dans la première étape de travail est plus grande que l'extension axiale de la surface de pièce à usiner.

3. Procédé selon la revendication 1 ou 2, **caractérisé en ce que** l'angle de rotation prédéfini est un multiple entier d'un angle, qui résulte de la division de 360° comme dividende et du nombre de l'au moins une gorge axiale comme diviseur.

4. Procédé selon l'une quelconque des revendications précédentes, **caractérisé en ce que** dans le cas de plusieurs gorges axiales, celles-ci sont réparties de préférence de façon équidistante dans le sens périphérique autour de l'axe de cylindre.

5. Procédé selon l'une quelconque des revendications précédentes, **caractérisé en ce que** dans la première étape de travail, au moins une paire de gorges axiales diamétralement opposées est formée dans la surface de pièce.

6. Procédé selon la revendication 4 ou 5, **caractérisé en ce que** l'angle de rotation prédéfini est de 180° ou 360°.

7. Procédé selon l'une quelconque des revendications précédentes, **caractérisé en ce que** les gorges axiales et/ou périphériques sont formées successivement sur une dimension finale définie ou une section transversale finale définie.

8. Procédé selon l'une quelconque des revendications précédentes, **caractérisé en ce que** les gorges axiales et/ou périphériques sont contre-dépouillées en forme de queue d'aronde.

9. Procédé selon l'une quelconque des revendications précédentes, **caractérisé en ce que**
d) dans une quatrième étape de travail, l'outil de formation de gorges est à nouveau tourné par rapport à la pièce d'un angle de rotation prédéfini, différent de l'angle de rotation de la deuxième étape de travail, autour de l'axe de cylindre de la surface de pièce, et
e) ensuite les première à troisième étapes de travail sont à nouveau exécutées.

10. Outil de formation de gorges pour augmenter mécaniquement la rugosité d'une surface cylindrique d'une pièce en particulier métallique, par exemple de la surface de roulement de piston d'une chemise de cylindre, par génération d'une microstructure définie en gorges se croisant, en particulier selon l'une quelconque des revendications 1 à 9, avec un corps support, qui supporte au moins une rangée de dents agencées de manière axialement parallèle, **caractérisé en ce que** :
l'au moins une rangée de dents comporte dans la direction axiale l'une après l'autre au moins une dent axiale pour la formation d'une gorge axiale et au moins une dent périphérique pour la formation d'une ou plusieurs gorges périphériques,
dans lequel la section transversale de chaque dent périphérique, vue dans une projection axiale dans la direction de pré-course d'outil, se trouve à l'intérieur de la section transversale de l'au moins une dent axiale.

11. Outil de formation de gorges selon la revendication 10, **caractérisé en ce que** l'au moins une dent axiale, vue dans une projection axiale dans la direction de pré-course d'outil, a une section transversale en forme de queue d'aronde.

12. Outil de formation de gorges selon la revendication 10, **caractérisé par** au moins deux dents axiales, qui sont agencées de manière axialement échelonnée et leurs sections transversales, vues dans une projection axiale dans la direction de pré-course d'outil, se superposent en une section transversale de superposition définie, de préférence contre-dépouillée, par exemple en forme de queue d'aronde.

13. Outil de formation de gorges selon l'une quelconque des revendications 10 à 12, **caractérisé en ce que** les dents agencées dans une seule et même rangée de dents sont réalisées au niveau d'un ou plusieurs éléments de dents agencés axialement l'un après l'autre, qui sont montés de manière remplaçable ou fixés durablement sur le corps support.

14. Outil de formation de gorges selon la revendication 13, **caractérisé en ce que** l'au moins une dent axiale et l'au moins une dent périphérique sont réalisées au niveau de différents éléments de dents.

15. Outil de formation de gorges selon l'une quelconque des revendications 10 à 14, **caractérisé par** plusieurs rangées de dents, qui sont réparties de préférence de façon équidistante dans le sens périphérique de l'outil de formation de gorges.

16. Outil de formation de gorges selon l'une quelconque des revendications 10 à 15, **caractérisé en ce que** l'au moins une dent périphérique, vue dans le sens périphérique, a une section transversale en forme de queue d'aronde.

17. Outil de formation de gorges selon l'une quelconque des revendications 10 à 16, **caractérisé par** au moins une paire de rangées de dents diamétralement opposées.

18. Outil de formation de gorges selon la revendication 17, **caractérisé en ce que** la section transversale d'au moins une dent périphérique d'une rangée de dents et la section transversale d'au moins une dent périphérique de l'autre rangée de dents diamétralement opposée, vue dans le sens périphérique, se superposent en une section transversale totale définie, de préférence en forme de queue d'aronde.

19. Outil de formation de gorges selon l'une quelconque des revendications 10 à 18, **caractérisé par** une tige de serrage pour le serrage de l'outil de formation de gorges au niveau d'un point de rupture ou de coupe du système de machine-outil.
